# EUROPEAN PATENT APPLICATION

(11) **EP 4 443 307 A1**
(43) Date of publication of application: **09.10.2024**
(21) Application number: 22900212.6
(22) Date of filing: 06.11.2022
(51) Int. Cl.: G06F 13/40, G06F 21/85, G06F 13/42

(54) **COMMUNICATION CONTROL METHOD AND APPARATUS FOR USB DEVICE AND PROTECTED DEVICE, AND ELECTRONIC DEVICE**

(30) Priority: 30.11.2021 CN 202111443682
(71) Applicant: Beijing Beyondinfo Technology Co., Ltd., Beijing 100020 (CN)
(72) Inventor: ZHANG, Hao, Beijing 100007 (CN); DU, Hua, Beijing 100007 (CN); CAI, Zhenghe, Beijing 100007 (CN)
(74) Representative: Zaboliene, Reda
(86) International application number: PCT/CN2022/130164
(87) International publication number: WO 2023/098407

(57) **Abstract**

The disclosure relates to a method for controlling the communication between USB device and protected device, which is applied to USB access control device, and the USB access control device is connected with the protected device through an interface or interfaces. In this way, the data of the protected device can be protected through the USB access control device externally connected to the protected device, so that the data leakage in the protected device can be effectively prevented, and the data of the protected device can be ensured without installing security protection software on the protected device.

## Description

### CROSS-REFERENCE TO RELATED APPLICATION

This application claims the benefit of Chinese Patent Application No. 202111443682.X, filed on Nov. 30, 2021 in the China National Intellectual Property Administration, the disclosure of which is incorporated herein by reference.

### BACKGROUND OF THE INVENTION

### 1. Technical field

The present disclosure relates to the field of device communication control, in particular to a method, an apparatus, an electronic device and a computer-readable medium for controlling the communication between USB device and protected device.

### 2. Background technology

In recent years, the rapid development of computer and network technology has greatly promoted the popularity of the network. While people increasingly enjoy the convenience brought by the network, it also brings new threats to the data security of computers used by people at work and in life, such as common malicious code intrusion, virus/Trojan infection, traffic attack, hacker theft, unauthorized access, impersonating legitimate users, destroying data integrity, interfering with the normal operation of the system, using the network to spread viruses and eavesdropping by intermediaries, etc.

At present, there are many technical means to solve the data security problem of the intranet computer network, such as installing and using the black/white list, flow control software, firewall, anti-virus, intrusion detection system and other network security products in the host, however, after the above measures were taken, various cybersecurity incidents still occurred frequently.

In addition, for some special device, such as the host equipped with special software control, and the device of engineer station/worker station in some industrial fields, due to the particularity of the system, there is no security protection software suitable for such systems on the market, or the installation of security software is likely to cause compatibility problems of the original host software, or even affect the performance. In addition, the hosts of these engineer stations or worker stations will not upgrade the operating system after they go live. Even after installing security software, they often do not update the anti malware version and malicious code base in a timely manner, which cannot play a comprehensive role in security protection.

The above information disclosed in the background technology section is only for enhance the understanding of the background of the disclosure, so it can include information that does not constitute prior art known to ordinary technicians in the art.

### SUMMARY OF THE INVENTION

In view of this, the present disclosure provides a method, an apparatus, an electronic device and a computer-readable medium for controlling the communication between a USB device and a protected device, which can protect the data of the protected device through the USB access control device externally connected to the protected device.

Other features and advantages of the disclosure will become apparent through the following detailed description, or will be learned in part through the practice of this disclosure.

According to one aspect of the present disclosure, a method for controlling the communication between a USB device and a protected device is proposed. The method is applied to a USB access control device. The USB access control device is connected with the protected device through an interface or interfaces. The method comprises: monitoring the communication data between the USB device and the protected device after the USB device is connected to the USB access control device and authenticated/verified; Determining the communication protocol type of the communication data according to the USB protocol specification; Disconnecting the communication between the USB device and the protected device according to the communication protocol type of the communication data.

Optionally, according to the USB protocol specification, the step of determining the communication protocol type of the communication data comprises: obtaining communication protocol information from the communication data according to the USB protocol specification; According to the communication protocol information, determining that the communication protocol type of the communication data is batch transmission protocol.

Optionally, according to the communication protocol type of the communication data, the step of disconnecting the communication between the USB device and the protected device comprises: if the communication protocol type of the communication data is batch transmission protocol, disconnecting the communication between the USB device and the protected device.

Optionally, according to the USB protocol specification, the step of determining the communication protocol type of the communication data comprises: obtaining communication protocol information from the communication data according to the USB protocol specification; According to the communication protocol information, determining that the communication protocol type of the communication data is synchronous transmission protocol.

Optionally, according to the communication protocol type of the communication data, the step of disconnecting the communication between the USB device and the protected device comprises: if the communication protocol type of the communication data is the synchronous transmission protocol, determining the data flow direction of the communication data; If the data flow direction is from the protected device to the USB device, disconnecting the communication between the USB device and the protected device.

Optionally, according to the USB protocol specification, the step of determining the communication protocol type of the communication data comprises: obtaining communication protocol information from the communication data according to the USB protocol specification; According to the communication protocol information, determining that the communication protocol type of the communication data is the interrupt transmission protocol.

Optionally, according to the communication protocol type of the communication data, the step of disconnecting the communication between the USB device and the protected device comprises: if the communication protocol type of the communication data is the interrupt transmission protocol, determining the data flow direction of the communication data; If the data flow direction is from the protected device to the USB device, disconnecting the communication between the USB device and the protected device.

Optionally, according to the USB protocol specification, the step of determining the communication protocol type of the communication data comprises: obtaining communication protocol information from the communication data according to the USB protocol specification; According to the communication protocol information, determining that the communication protocol type of the communication data is a user-defined transmission protocol.

Optionally, according to the communication protocol type of the communication data, the step of disconnecting the communication between the USB device and the protected device comprises: if the communication protocol type of the communication data is the custom transmission protocol, determining whether the communication data is unresolved data; If the communication data is the non resolvable data, disconnecting the communication between the USB device and the protected device.

Optionally, the method also comprises sending alarm information to the protected device when disconnecting the communication between the USB device and the protected device.

Optionally, the method also comprises: turning on the switch deployed in the USB access control device before the USB access control device is powered on, so that the USB device can communicate with the protected device normally; Or after the USB access control device is powered on, turning off the switch deployed in the USB access control device and trigger the enumeration mechanism of the USB device.

According to one aspect of the disclosure, an apparatus for controlling the communication between a USB device and a protected device is proposed, which is applied to a USB access control device. The USB access control device is connected with the protected device through an interface or interfaces, and the device comprises: a monitoring module, which is used for monitoring the communication data between the USB device and the protected device after the USB device is connected to the USB access control device and authenticated/verified; A communication protocol type determining module, which is used for determining the communication protocol type of the communication data according to the USB protocol specification; A control module for disconnecting the communication between the USB device and the protected device according to the communication protocol type of the communication data.

According to one aspect of the present disclosure, an electronic device is proposed, which comprises: one or more processors; A storage device for storing one or more programs; When one or more programs are executed by one or more processors, one or more processors implement the above method.

According to an aspect of the present disclosure, a computer-readable medium is proposed, on which a computer program is stored. When the program is executed by a processor, the method described above is implemented.

According to the method, apparatus, electronic device and computer-readable medium for controlling the communication between the USB device and the protected device disclosed in this disclosure, this method is applied to the USB access control device, which is connected with the protected device through an interface or interfaces. In this way, the USB access control device externally connected to the protected device can protect the data of the protected device, effectively prevent the leakage of data in the protected device, and ensure the data security of the protected device without installing security protection software on the protected device. For example, after the USB device is connected to the USB access control device and passes authentication, the USB access control device monitors the communication data between the USB device and the protected device, determines the communication protocol type of the communication data between them according to the USB protocol specification, and then disconnects the communication between the USB device and the protected device according to the communication protocol type of the communication data.

It should be understood that the above general description and the following detailed description are only illustrative and do not limit the scope of patent.

### BRIEF DESCRIPTION OF DRAWINGS

The above and other objects, features and advantages of the present disclosure will become more apparent by describing the example embodiments thereof in detail with reference to the accompanying drawings. The drawings described below are only some embodiments of the present disclosure. For ordinary technicians in the art, other drawings can be obtained from these drawings without paying creative labor.
Figure 1 is a structural diagram of a USB device access control system shown according to an exemplary embodiment.
Figure 2 is a flowchart of a method for controlling the communication between a USB device and a protected device according to an exemplary embodiment.
Figure 3 is a schematic diagram of the specific implementation of the USB communication data analysis module in the USB access control device according to an exemplary embodiment.
Figure 4 is a flowchart of a method for controlling the communication between a USB device and a protected device shown according to another exemplary embodiment.
Figure 5 is a flowchart of a method for controlling the communication between a USB device and a protected device shown according to another exemplary embodiment.
Figure 6 is a flowchart of a method for controlling the communication between a USB device and a protected device shown according to another exemplary embodiment.
Figure 7 is a flowchart of a method for controlling the communication between a USB device and a protected device shown according to another exemplary embodiment.
Figure 8 is a schematic diagram of the connection relationship between the data forwarding module and the USB communication data analysis module according to an exemplary embodiment.
Figure 9 is a schematic diagram of a network version USB device access control system shown according to an exemplary embodiment.
Figure 10 is a schematic diagram of the software deployed by management workstation A according to an exemplary embodiment.
Figure 11 is a schematic diagram of the connection relationship between the USB communication data analysis module and the data forwarding module in the USB registration device according to an exemplary embodiment.
Figure 12 is a block diagram of a communication control device between a USB device and a protected device shown according to an exemplary embodiment.
Fig. 13 is a block diagram of an electronic device shown according to an exemplary embodiment.
Fig. 14 is a block diagram of a computer-readable medium illustrated according to an exemplary embodiment.

### DETAILED DESCRIPTION

Examplary embodiments will now be described more fully with reference to the accompanying drawings. However, the examplary embodiments can be implemented in various forms, and should not be understood as limitation to the embodiments described herein; On the contrary, providing these embodiments will make the disclosure comprehensive and complete, and comprehensively convey the idea of examplary embodiments to those skilled in the art. The same reference numerals in the figure represent the same or similar parts, and therefore repeated description of them will be omitted.

Moreover, the described features, structures or characteristics may be combined in one or more embodiments in any suitable manner. In the following description, many specific details are provided to give a full understanding of the embodiments of the present disclosure. However, those skilled in the art will realize that the technical solution of the present disclosure can be practiced without one or more specific details, or other methods, components, devices, steps, etc. can be adopted. In other cases, well-known methods, devices, implementations, or operations are not shown or described in detail to avoid obscuring various aspects of the present disclosure.

The block diagram shown in the figures is only a functional entity and does not necessarily correspond to a physically independent entity. That is, these functional entities can be implemented in software, or in one or more hardware modules or integrated circuits, or in different networks and/or processor devices and/or microcontroller devices.

The flow chart shown in the figures is only an exemplary description, and does not necessarily include all contents and operations/steps, nor must it be executed in the order described. For example, some operations/steps can also be decomposed, while some operations/steps can be merged or partially merged, so the actual execution order may change according to the actual situation.

It should be understood that although the terms first, second, third, etc. may be used herein to describe various components, these components should not be restricted by these terms. These terms are used to distinguish one component from another. Therefore, the first component discussed below can be called the second component without deviating from the teaching of the concepts in the present disclosure. As used herein, the term "and/or" includes any one and all combinations of one or more of the associated listed items.

Those skilled in the art can understand that the figures are only schematic diagrams of example embodiments, and the modules or processes in the figures are not necessarily necessary for implementing the disclosure, so they cannot be used to limit the protection scope of the patent.

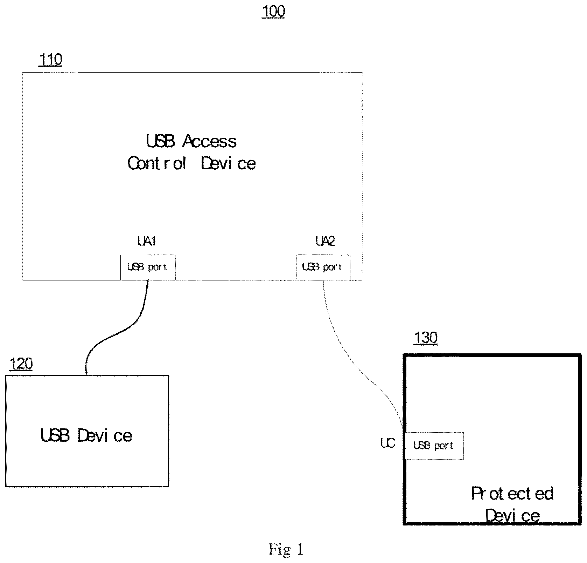

Figure 1 is a structural diagram of a USB device access control system shown according to an exemplary embodiment.

As shown in Figure 1, the USB device access control system 100 comprises the USB access control device 110, the USB device 120, and the protected device 130. The USB access control device 110 has two USB ports, namely USB port UA1 and USB port UA2. The number of USB ports can be increased based on the practical application scenario.

In this embodiment, the USB access control device 110 and the USB device 120 can be connected through the USB port UA1. The USB access control device 110 and the protected device 130 can be connected through the USB port UA2. The USB access control device 110 can be used to protect data in the protected device 130. For example, when the USB device 120 is connected to USB port UA1 of USB access control device 110, the USB access control device 110 can authenticate the USB device 120 according to the descriptor/descriptors of USB device 120. After the USB device 120 is connected to the USB access control device 110 and authenticated, the USB access control device 110 monitors the communication data between the USB device 120 and the protected device 130, determines the communication protocol type of the communication data between them according to the USB protocol specification, and then disconnects the communication between the USB device 120 and the protected device 130 according to the communication protocol type of the communication data.

In this embodiment, the USB access control device 110 may be a security device with a data protection function. The USB device 120 may be an external storage device, an external HID device, or the like. For example, the external storage device can be a USB flash disk, a portable hard disk, and so on. External HID devices can be mouse, keyboard, handle, etc.

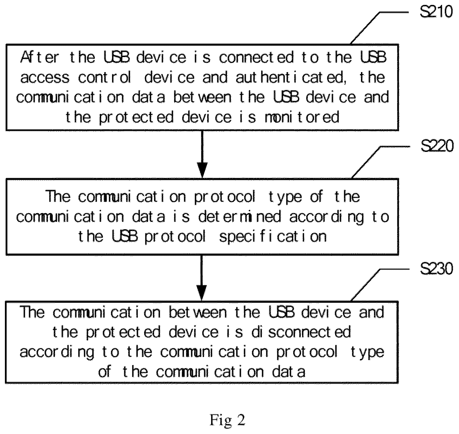

Figure 2 is a flowchart of a method for controlling the communication between a USB device and a protected device according to an exemplary embodiment. The method is applied to the USB access control device, which is connected with the protected device through an interface/interfaces.

As shown in Figure 2, the method for controlling the communication between the USB device and the protected device can comprises steps S210 to S230.

In the step S210, after the USB device is connected to the USB access control device and authenticated, the communication data between the USB device and the protected device is monitored.

In the step S220, the communication protocol type of the communication data is determined according to the USB protocol specification.

In the step S230, the communication between the USB device and the protected device is disconnected according to the communication protocol type of the communication data.

This method can protect the data of the protected device through the USB access control device externally connected to the protected device, effectively prevent the leakage of data in the protected device, and ensure the data security of the protected device without installing security protection software on the protected device. For example, after the USB device is connected to the USB access control device and passes authentication, the USB access control device monitors the communication data between the USB device and the protected device, determines the communication protocol type of the communication data between them according to the USB protocol specification, and then disconnects the communication between the USB device and the protected device according to the communication protocol type of the communication data.

In some embodiments of the disclosure, the communication protocol type of the communication data between the USB device and the protected device can include any one or more of the following: batch transmission protocol, synchronous transmission protocol, interrupt transmission protocol, and custom transmission protocol.

In some embodiments of the disclosure, each communication protocol type can include the following transactions: Setup transaction, IN transaction, OUT transaction. The token packet of all transactions is initiated by the USB Host (for example, the protected device). The core principle of USB device communication data analysis and exception prevention is: wide access and strict exit, that is, based on USB device access authorization, the communication protocol type is limited for the communication data flowing into the protected device. For example, batch transmission is prohibited, synchronous transmission only allows IN transactions (that is, USB device to protected device), interrupt transmission can run IN transactions, and OUT transactions need to determine the direction of data transmission (that is, data transmission from USB device to protected device is allowed, and data transmission from protected device to USB device is prohibited).

In some embodiments of the disclosure, when the USB device is connected to the USB access control device, the USB device needs to be authenticated. When the USB device passes the authentication, the USB device can communicate with the protected device. The authentication process of the USB device can be as follows: when the USB device is connected to the USB access control device, obtaining the descriptor/descriptors of the USB device, comparing the descriptor/descriptors of the USB device with the registration information of the USB device, if the descriptor /descriptors of the USB device is/are the same as that/those in the registration information of the USB device, turning on the switch deployed in the USB access control device, so that the USB device can communicate with the protected device. In addition, when the USB device is communicating with the protected device, the descriptor/descriptors of the USB device is continually obtained, and the descriptor/descriptors of the USB device is compared with that/those in the registration information of the USB device. If there is any difference between the descriptor/descriptors of the USB device and that/those in the registration information of the USB device, the switch/switches deployed in the USB access control device is/are turned off.

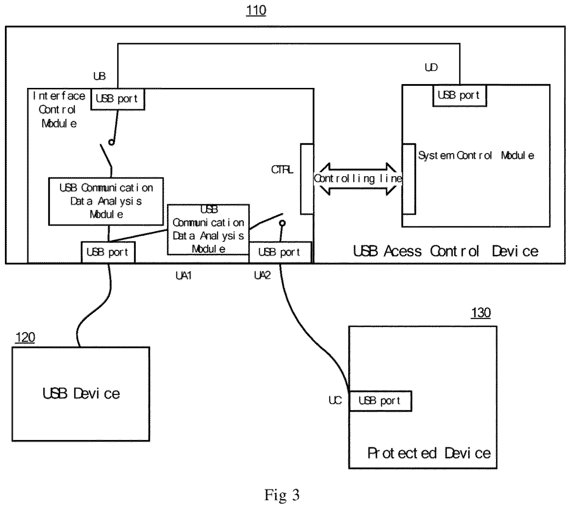

Referring to Figure 3, the USB access control device 110 may include an interface control module and a system control module. The interface control module has three USB ports, namely USB port UA1, USB port UA2 and USB port UB. The USB port UA1 and USB port UA2 are external interfaces, and USB port UB is an internal interface. The internal interface UA2 is connected with the corresponding USB port UC of the protected device 130. The external interface UA1 is used to access one or more USB devices 120. The system control module is connected with an internal interface, which is USB port UD. The USB port UD of the system control module is used for electrical connection with the USB port UB of the interface control module to control the security authentication of the external device connected to the external interface UA1 on the interface control module.

In this embodiment, two USB communication data analysis modules and two switches are also deployed in the interface control module. As shown in Figure 3, one end of a USB communication data analysis module is connected to the external interface UA1, the other end is connected to one end of a switch, and the other end of the switch is connected to the internal interface UB. One end of the other USB communication data analysis module is connected with the external interface UA1, the other end is connected with one end of a switch, and the other end of the switch is connected with the external interface UA2. In this way, the USB communication data analysis module is connected in series and bypassed on the connection between the external interface of the interface control module and the USB port of the protected device. The descriptor/descriptors and/or communication data of the USB device in the direct connection path will be monitored in real time. The USB communication data analysis module is implemented based on the USB protocol analysis, which is used to analyze the descriptor/descriptors and/or communication data of the USB device. For example, the USB communication data analysis module between the external interface UA1 and the internal interface UB is used to analyze the descriptor/descriptors of the USB device 120. The USB communication data analysis module between the external interface UA1 and the external interface UA2 is used to analyze the descriptor/descriptors of the USB device 120 and the communication data between the USB device 120 and the protected device 130.

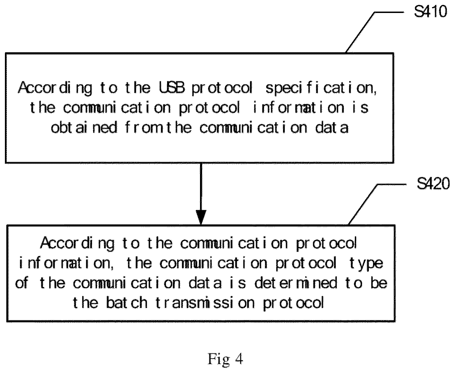

The following is the details of the control of communication between USB device and protected device according to the type of communication protocol through the embodiment of Figures 4 to 7.

Figure 4 is a flowchart of a method for controlling the communication between a USB device and a protected device shown according to another exemplary embodiment.

As shown in Figure 4, the above step S220 can comprises a step S410 and a step S420.

In the step S410, according to the USB protocol specification, the communication protocol information is obtained from the communication data.

In the step S420, according to the communication protocol information, the communication protocol type of the communication data is determined to be the batch transmission protocol.

In some embodiments of the disclosure, if the communication protocol type of the communication data between the USB device and the protected device is batch transmission protocol, the communication between the USB device and the protected device is disconnected, so that the security of the data in the protected device can be ensured in time.

Referring to Figure 3, after the USB device 120 is connected to the USB access control device 110 and authenticated, turn on the switch/switches between the external interface UA1 and the external interface UA2 in the USB access control device 110. The USB device 120 can communicate with the protected device 130. At this time, the communication protocol type of the communication data between the USB device 120 and the protected device 130 is detected in real time through the USB communication data analysis module between the external interface UA1 and the external interface UA2 in the USB access control device 110. When the communication protocol type is batch transmission protocol, the switch/switches between the external interface UA1 and the external interface UA2 in the USB access control device 110 will be turned. At this time, the USB device 120 and the protected device 130 cannot communicate, so that the data in the protect device can be protected in time.

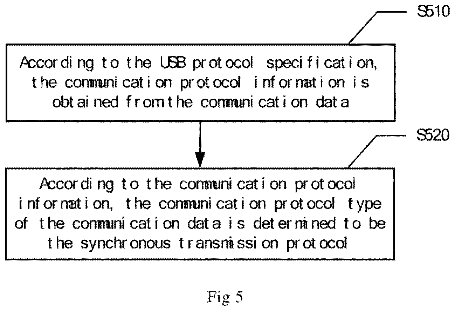

Figure 5 is a flowchart of a method for controlling the communication between a USB device and a protected device shown according to another exemplary embodiment.

As shown in Figure 5, the above step S220 can include a step S510 and a step S520.

In the step S510, according to the USB protocol specification, the communication protocol information is obtained from the communication data.

In the step S520, according to the communication protocol information, the communication protocol type of the communication data is determined to be the synchronous transmission protocol.

In some embodiments of the disclosure, if the communication protocol type of the communication data between the USB device and the protected device is synchronous transmission protocol, the data flow direction of the communication data is determined. If the data flow direction is from the protected device to the USB device, the communication between the USB device and the protected device is disconnected, so that the data in the protected device can be protected in time.

Referring to Figure 3, after the USB device 120 is connected to the USB access control device 110 and authenticated, the switch/switches between the external interface UA1 and the external interface UA2 in the USB access control device 110 will be turned on. The USB device 120 can communicate with the protected device 130. At this time, the communication protocol type of the communication data between the USB device 120 and the protected device 130 is detected in real time through the USB communication data analysis module between the external interface UA1 and the external interface UA2 in the USB access control device 110. When the communication protocol type is monitored as synchronous transmission protocol, the data direction of the communication data is determined. If the data flow direction is from the protected device 130 to the USB device 120, the communication protocol type between the external interface UA1 and the external interface UA2 in the USB access control device 110 is disconnected. The USB device 120 cannot communicate with the protected device 130. In this way, the data in the protected device can be protected in time.

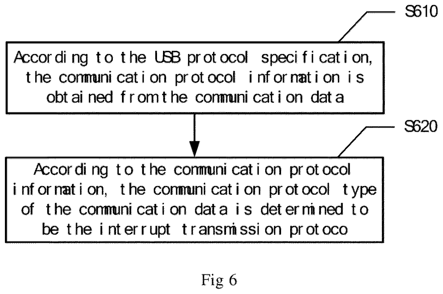

Figure 6 is a flowchart of a method for controlling the communication between a USB device and a protected device shown according to another exemplary embodiment.

As shown in Figure 6, the above step S220 can include a step S610 and a step S620.

In the step S610, according to the USB protocol specification, the communication protocol information is obtained from the communication data.

In the step S620, according to the communication protocol information, the communication protocol type of the communication data is determined to be the interrupt transmission protocol.

In some embodiments of the disclosure, if the communication protocol type of the communication data between the USB device and the protected device is the interrupt transmission protocol, the data flow direction of the communication data is determined. If the data flow direction is from the protected device to the USB device, the communication between the USB device and the protected device is disconnected, so that the data in the protected device can be protected in time.

Referring to Figure 3, after the USB device 120 is connected to the USB access control device 110 and authenticated, turning on the switch/switches between the external interface UA1 and the external interface UA2 in the USB access control device 110. The USB device 120 can communicate with the protected device 130. At this time, the communication protocol type of the communication data between the USB device 120 and the protected device 130 is detected in real time through the USB communication data analysis module between the external interface UA1 and the external interface UA2 in the USB access control device 110. When it is detected that the communication protocol type is the interrupt transmission protocol, the data direction of the communication data is determined. If the data flow direction is from the protected device 130 to the USB device 120, the switch/switches between the external interface UA1 and the external interface UA2 in the USB access control device 110 will be disconnected. The USB device 120 cannot communicate with the protected device 130, In this way, the data in the protected device can be protected in time.

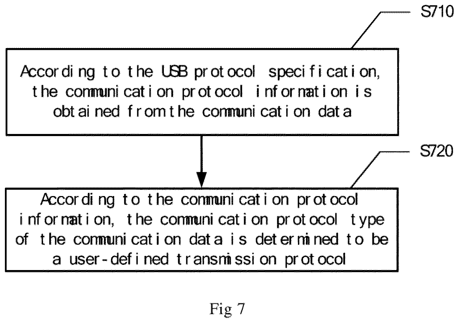

Figure 7 is a flowchart of a method for controlling the communication between a USB device and a protected device shown according to another exemplary embodiment.

As shown in Figure 7, the above step S220 can comprises a step S710 and a step S720.

In the step S710, according to the USB protocol specification, the communication protocol information is obtained from the communication data.

In the step S720, according to the communication protocol information, the communication protocol type of the communication data is determined to be a user-defined transmission protocol.

In some embodiments of the disclosure, if the communication protocol type of the communication data between the USB device and the protected device is a user-defined transmission protocol, it is determined whether the communication data is non resolvable data. If the communication data is non resolvable data, the communication between the USB device and the protected device is disconnected, so that the data in the protected device can be protected in time.

Referring to Figure 3, after the USB device 120 is connected to the USB access control device 110 and authenticated, the switch between the external interface UA1 and the external interface UA2 in the USB access control device 110 is turned on, and the USB device 120 can communicate with the protected device 130. At this time, the communication protocol type of the communication data between the USB device 120 and the protected device 130 is detected in real time through the USB communication data analysis module between the external interface UA1 and the external interface UA2 in the USB access control device 110. When it is detected that the communication protocol type is a user-defined transmission protocol, it is determined whether the communication data is non resolvable data. If the communication data is non resolvable data, the switch between the external interface UA1 and the external interface UA2 in the USB access control device 110 is turned off. At this time, USB device 120 and protected device 130 cannot communicate. In this way, the data in the protected device can be protected in time.

Based on the above embodiment, the method also comprises: sending alarm information to the protected device when the communication between the USB device and the protected device is disconnected. Referring to Figure 3, when the USB access control device 110 disconnects the switch between the external interface UA1 and the external interface UA2, it sends alarm information to the protected device 130 to remind the relevant personnel responsible for the protected device 130.

Based on the above embodiment, the method also comprises: turning on the switch/switches deployed in the USB access control device before the USB access control device is powered on, so that the USB device can communicate with the protected device normally; Or after the USB access control device is powered on, the switch/switches deployed in the USB access control device is/are turned off and the enumeration mechanism of the USB device is triggered. Referring to Figure 3, when the USB device 120 is connected to the USB access control device 110, and the USB access control device 110 is not powered on, the switch between the external interface UA1 and the external interface UA2 in the USB access control device 110 is turned on, so that the USB device 120 and the protected device 130 can communicate normally and realize the power off bypass function of USB access control device 110. On the contrary, when the USB device 120 is connected to the USB access control device 110, and the USB access control device 110 is powered on, the switch between the external interface UA1 and the external interface UA2 in the USB access control device 110 is turned off, and the enumeration mechanism of the USB device 120 is triggered, that is, authenticate the USB device 120.

The enumeration mechanism of USB devices, that is, the authentication process of USB devices, is described in detail through the following examples.

Referring to Figure 3, the USB device 120 is connected to the direct connection external interface UA1, connects the USB port UC of the protected device, powers on the inserted USB device 120, and enters the device identification process according to the USB specification, that is, the enumeration process of the USB device 120. For example, when the USB device 120 is connected to the external interface UA1 of the USB access control device 110, the switch between the internal interface UB of the USB access control device 110 and the external interface UA1 is turned on. At this time, the system control module can control the USB communication data analysis module between the two parts to obtain the descriptor/descriptors of the USB device 120, and compare the descriptor/descriptors of the USB device 120 with that/those in the registration information of the USB device 120. If the descriptor/descriptors of the USB device 120 is/are the same as the registration information of the USB device 120, the switch/switches deployed in the USB access control device 110 (for example, the switch between the external interface UA1 and the external interface UA2) is/are turned on, so that the USB device 120 can communicate with the protected device 130. At this time, the USB device 120 can communicate with the protected device 130 through communication data through authentication. During communication, the USB device 120 monitors the communication data between the USB device 120 and the protected device 130 through the USB communication data analysis module between the external interface UA1 and the external interface UA2 of the USB access control device 110, the communication protocol type of the communication data between the USB device 120 and the protected device 130 is determined according to the USB protocol specification, and then the communication between the two parts is controlled according to the communication protocol type of the communication data, for example, the communication between the USB device 120 and the protected device 130 is disconnected, so as to protect the data the protected device 130 and effectively prevent leakage of the data in the protected device 130 through the USB access control device 110 externally connected to the protected device 130, It is not necessary to install security protection software on the protected device 130 for ensuring the data security of the protected device.

In addition, in the embodiment of the disclosure, when the USB device 120 communicates with the protected device 130, it is also necessary to continue to obtain the descriptor/descriptors of the USB device 120 through the USB communication data analysis module between the external interface UA1 and the external interface UA2 of the USB access control device 110, and continue to compare the descriptor/descriptors of the USB device 120 with that/those in the registration information of the USB device 120. If the descriptor/descriptors of the USB device 120 is/are different from that/those in the registration information of the USB device 120, the switch/switches deployed in the USB access control device (for example, the switch between the external interface UA1 and the external interface UA2)is/are turned on. At this time, the USB device 120 cannot communicate with the protected device 130, so that the data of the protected device 130 can also be protected.

Specifically, after the USB device 120 is connected to the UA1 of the USB access control device 110, it is connected to the corresponding USB port on the protected device 130 through the internal connection of the USB access control device 110. The connected USB device 120 is powered on and will enter the device identification process according to the USB specification, that is, the first enumeration process of the USB device 120. After the first enumeration is passed, the communication data between the USB device 120 and the protected device 130 can be obtained in real time through the USB communication data analysis module, the USB communication data analysis module on the main control board will analyze the communication data between the USB device 120 and the protected device 130 in real time, extract the descriptors (such as vendor ID, product identification code (PID) and serial number information, configuration number, currently used configuration identification, number of interfaces supported by the configuration, interface number, interface class, interface subclass, interface protocol, etc.) in the enumeration process, and compare and match with the registration information. If there is any inconsistency, the communication between the USB device 120 and the protected device 130 is disconnected, and an alarm message is sent.

In some embodiments of the disclosure, the descriptor/descriptors of the USB device 120 can include any one or more of the following: device descriptor, configuration descriptor, interface descriptor, and HID descriptor.

According to the USB protocol specification, a USB device 120 has only one device descriptor, which includes the following table 1.

**Table 1**

| **Offset** | **name** | **Size (bytes)** | **description** |
|---|---|---|---|
| 0 | BLength | 1 | Descriptor length (18 bytes) |
| 1 | BDescriptiorType | 1 | Descriptor type (device descriptor is 0x01) |
| 2 | BcdUSB | 2 | USB protocol version used by the device |
| 4 | BDeviceClass | 1 | Class code |
| 5 | BDeviceSubClass | 1 | Subclass code |
| 6 | BDeviceProtocol | 1 | Protocol used by the device |
| 7 | BMaxPacketSize0 | 1 | Maximum packet length of endpoint 0 (only 8, 16, 32, 64 are legal values) |
| 8 | IdVendor | 2 | Vendor ID |
| 10 | IdProduct | 2 | Product ID |
| 12 | BcdDevice | 2 | Device version number |
| 14 | IManufacturer | 1 | Index of the string describing the manufacturer |
| 15 | IProduct | 1 | Index of the string describing the product |
| 16 | ISerialNumber | 1 | Index of product serial number string |
| 17 | BNumConfigurations | 1 | Number of configurations |

According to the USB protocol specification, the USB device 120 can have at least one or more configuration descriptors. The last item of the above device descriptor bNumConfigurations defines the number of configuration descriptors. For example, the USB device 120 currently selects one of the configurations. The configuration descriptor information is shown in Table 2, where bConfigurationValue is the identifier of the current configuration.

**Table 2**

| **Offset** | **name** | **Size (bytes)** | **description** |
|---|---|---|---|
| 0 | BLength | 1 | Descriptor length (9 bytes) |
| 1 | BDescriptorType | 1 | Descriptor type (configuration descriptor is 0x02) |
| 2 | WTotalLength | 2 | Total length of configuration descriptor set |
| 4 | BNumlnterfaces | 1 | Number of interfaces supported by configuration |
| 5 | BConfigurationValue | 1 | Configured values |
| 6 | IConfiguration | 1 | The string index value describing the configuration change |
| 7 | BmAttributes | 1 | Properties of the device |
| 8 | BMaxPower | 1 | Current required by the device (unit: 2ma) |

The above interface descriptor can be used to describe the interface under the current configuration. For example, the single function USB device 120 has one interface, such as a USB flash disk. The USB device 120 with composite functions has multiple interfaces, for example, a composite device with a mouse and keyboard, and one of the interfaces corresponds to a function. A USB device 120 can have multiple configurations, but currently only one configuration can be selected. When the device descriptor device type bDeviceClass is 0, that is to say, the interface descriptor is used to identify the class. At this time, the interface class, interface subclass, and interface protocol are used to describe the class of this function of USB device 120.

In some embodiments of the disclosure, the step of obtaining the descriptor/descriptors of the USB device comprises: sending a Get_Descriptor control packet to the USB device; Receiving the device descriptor determined by the USB device root Get_Descriptor control packet. In this way, the device descriptor of the USB device can be request to obtain by sending a USB command (for example, Get_Descriptor control package) to the USB device, so that the device descriptor of the USB device can be quickly obtained by USB access control device.

Referring to Figure 3, when the USB device 120 is connected to the external interface UA1 of the USB access control device 110, the system control module controls the USB communication data analysis module between the internal interface UB and the external interface UA1 to obtain the device descriptor/descriptors of the USB device 120, and it is determined whether to turn on or turn off the switch/switches deployed in the USB access control device 110 based on the device descriptor/descriptors. Specifically, when the USB device 120 is connected to the external interface UA1 of the USB access control device 110, the Get_Descriptor control package is sent to the USB device 120 through the USB communication data analysis module between the internal interface UB and the external interface UA1. Based on the control package, the USB device 120 returns its device descriptor/descriptors to the USB communication data analysis module, such as bDeviceClass, bDeviceSubClass, bDeviceProtocol, bLength, bDescriptorType, bString, and so on. In this case, the USB communication data analysis module can compare the registered information of the USB device 120 acquired in advance with the currently acquired device descriptor/descriptors, and enumerate the USB device 120 for the first time in this way.

For example, the step of comparing the descriptor/descriptors of the USB device 120 with the that/those in registration information of the USB device 120 comprises: comparing to determine whether the bDeviceClass in the device descriptor is the same as the bDeviceClass in the registration information; Comparing to determine whether the bDeviceSubClass in the device descriptor is the same as the bDeviceSubClass in the registration information; Comparing to determine whether the bDeviceProtocol in the device descriptor is the same as the bDeviceProtocol in the registration information; Comparing to determine whether the bLength in the device descriptor is the same as that in the registration information; Comparing to determine whether the bDescriptorType in the device descriptor is the same as the bDescriptorType in the registration information; And comparing to determine whether the bString in the device descriptor is the same as the bString in the registration information.

In some embodiments of the disclosure, if the bDeviceClass, bDeviceSubClass, bDeviceProtocol, bLength, bDescriptorType, and bString in the device descriptor are correspondingly the same as the bDeviceClass, bDeviceSubClass, bDeviceProtocol, bLength, bDescriptorType, and bString in the registration information, the switch/switches deployed in the USB access control device 110 is/are turned on. For example, the switch between the external interface UA1 and the external interface UA2 in the USB access control device 110 is turned on.

In some embodiments of the disclosure, if there is any difference between bDeviceClass, bDeviceSubClass, bDeviceProtocol, bLength, bDescriptorType, and bString of the device descriptor and bDeviceClass, bDeviceSubClass, bDeviceProtocol, bLength, bDescriptorType, and bString in the registration information, the switch/switches deployed in the USB access control device 110 is/are turned off. For example, the switch between the external interface UA1 and the external interface UA2 in the USB access control device 110 is turned off. It should be noted that if the device descriptor in the descriptor of the USB device 120 is different from the device descriptor in the registration information, and the switch itself in the USB access control device 110 is in the turned-off state, then it is OK to keep it in the turned-off state at this time.

In some embodiments of the disclosure, obtaining the descriptor/descriptors of the USB device can also comprises sending the Get_Descriptor_Configuration control package to the USB device; In the step S520, the configuration descriptor determined by the USB device according to the Get_Descriptor_Configuration control packet is received. In this way, the USB command (for example, Get_Descriptor_Configuration control package) is sent to the USB device to request to obtain the configuration descriptor of the USB device, so that the USB access control device can quickly obtain the configuration descriptor of the USB device.

Referring to Figure 3, when the USB device 120 is connected to the external interface UA1 of the USB access control device 110, the system control module controls the USB communication data analysis module between the internal interface UB and the external interface UA1 to obtain the configuration descriptor of the USB device 120, and it is determined whether to turn on or turn off the switch/switches deployed in the USB access control device 110 based on the configuration descriptor. Specifically, when the USB device 120 is connected to the external interface UA1 of the USB access control device 110, the Get_Descriptor_Configuration control package is sent to the USB device 120 through the USB communication data analysis module between the internal interface UB and the external interface UA1. Based on the control package, the USB device 120 returns its configuration descriptor to the USB communication data analysis module, such as bNumInterfaces, bConfigurationValue, wTotalLength, etc. in the return configuration descriptor. In this case, the USB communication data analysis module can compare the registered information of the USB device 120 obtained in advance with the currently obtained configuration descriptor, and enumerate the USB device 120 for the first time in this way.

For example, the step of comparing the descriptor of the USB device 120 with the registration information of the USB device 120 comprises: comparing to determine whether the bNumInterfaces in the configuration descriptor are the same as the bNumInterfaces in the registration information; Comparing to determine whether the bConfigurationValue in the configuration descriptor is the same as the bConfigurationValue in the registration information; And Comparing to determine whether the wTotalLength in the configuration descriptor is the same as the wTotalLength in the registration information.

In some embodiments of the disclosure, if the bNumInterfaces, bConfigurationValue, and wTotalLength in the configuration descriptor are correspondingly the same as the bNumInterfaces, bConfigurationValue, and wTotalLength in the registration information, the switch/switches of the USB access control device 110 is/are turned on. For example, the switch between the external interface UA1 and the external interface UA2 in the USB access control device 110 is turned on.

In some embodiments of the disclosure, if there is any difference between bNumInterfaces, bConfigurationValue, and wTotalLength in the configuration descriptor and bNumInterfaces, bConfigurationValue, and wTotalLength in the registration information, the switch/switches of the USB access control device 110 is/are turned off. For example, the switch between the external interface UA1 and the external interface UA2 in the USB access control device 110 is turned off. It should be noted that if the configuration descriptor of the descriptor of the USB device 120 is different from the configuration descriptor in the registration information, and the switch in the USB access control device 110 is in the turned-off state, then it is OK to keep it in the turned-off state at this time.

In some embodiments of the disclosure, the step of obtaining the descriptor/descriptors of the USB device can also comprises sending the Get_Descriptor_Configuration control package to the USB device; Receiving the interface descriptor determined by the USB device according to the Get_Descriptor_Configuration control packet. In this way, the USB command (for example, Get_Descriptor_Configuration control package) is sent to the USB device to request to obtain the interface descriptor of the USB device, so that the USB access control device can quickly obtain the interface descriptor of the USB device.

Referring to Figure 3, when the USB device 120 is connected to the external interface UA1 of the USB access control device 110, the system control module controls the USB communication data analysis module between the internal interface UB and the external interface UA1 to obtain the interface descriptor of the USB device 120, and determines whether to turn on or turn off the switch/switches deployed in the USB access control device 110 based on the interface descriptor. Specifically, when the USB device 120 is connected to the external interface UA1 of the USB access control device 110, the Get_Descriptor_Configuration control package is sent to the USB device 120 through the USB communication data analysis module between the internal interface UB and the external interface UA1. Based on the control package, the USB device 120 returns its interface descriptor to the USB communication data analysis module, such as bInterfaceNumber, bInterfaceClass, bDeviceSubClass, and blnterfaceProtocol in the interface descriptor. In this case, the USB communication data analysis module can compare the registered information of the USB device 120 obtained in advance with the currently obtained interface descriptor, and enumerate the USB device 120 for the first time in this way.

For example, the step of comparing the descriptor of the USB device 120 with the registration information of the USB device 120 comprises: comparing to determine whether the bInterfaceNumber in the interface descriptor is the same as the bInterfaceNumber in the registration information; Comparing to determine whether the bInterfaceClass in the interface descriptor is the same as the bInterfaceClass in the registration information; Comparing to determine whether the bInterfaceSubClass in the interface descriptor is the same as the bInterfaceSubClass in the registration information; And Comparing to determining whether the bInterfaceProtocol in the interface descriptor is the same as the bInterfaceProtocol in the registration information.

In some embodiments of the disclosure, if the descriptor of the USB device 120 is the same as that in the registration information of the USB device 120, the step of turning on the switches deployed in the USB access control device 110 comprises: if the bInterfaceNumber, bInterfaceClass, bInterfaceSubClass, and bInterfaceProtocol in the interface descriptor are correspondingly the same as the bInterfaceNumber, bInterfaceClass, bInterfaceSubClass, and bInterfaceProtocol in the registration information, the switch/switches deployed in the closed USB access control device 110is/are turned on. For example, the switch between the external interface UA1 and the external interface UA2 in the USB access control device 110 is turned on.

In some embodiments of the disclosure, if the descriptor of the USB device 120 is different from the registration information of the USB device 120, the step of turning off the switch/switches deployed in the USB access control device 110 comprises: if there is any differences between the bInterfaceNumber, bInterfaceClass, bInterfaceSubClass, and bInterfaceProtocol in the interface descriptor and the bInterfaceNumber, bInterfaceClass, bInterfaceSubClass, and bInterfaceProtocol in the registration information, turning off the switches deployed in the USB access control device 110, for example, turning off the switch between the external interface UA1 and the external interface UA2 in the USB access control device 110. It should be noted that if the interface descriptor of the descriptors of the USB device 120 is different from the interface descriptor in the registration information, and the switch in the USB access control device 110 is in the turned-off state, it is OK to keep it in the turned-off state at this time.

The above embodiment describes that the descriptor/descriptors of the USB device can be a device descriptor, a configuration descriptor, or an interface descriptor. It should be noted that the USB device descriptor/descriptors in the disclosure can include device descriptor, configuration descriptor, and interface descriptor. Referring to Figure 3, when the USB device 120 is connected to the external interface UA1 of the USB access control device 110, the device descriptor, configuration descriptor, and interface descriptor of the USB device 120 are obtained through the USB communication data analysis module between the external interface UA1 and the internal interface UB in the USB access control device 110. For example, a USB command is sent to the USB device 120, which returns the device descriptor, configuration descriptor, and interface descriptor according to the corresponding USB command. Then the USB communication data analysis module compares them with the device descriptor, configuration descriptor, and interface descriptor based on the device descriptor, configuration descriptor, and interface descriptor in the registration information of the USB device 120, which is the first enumeration of the USB device 120. If the device descriptor, configuration descriptor, and interface descriptor of the descriptors of the USB device 120 are correspondingly the same as the device descriptor, configuration descriptor, and interface descriptor in the registration information, the switch/switches deployed in the USB access control device 110 is/are turned on, for example, the switch between the external interface UA1 and the external interface UA2 in the USB access control device 110 is turned on. On the contrary, if any of the device descriptor, configuration descriptor, and interface descriptor in the descriptor of the USB device is different from the device descriptor, configuration descriptor, and interface descriptor in the registration information, the switch/switches deployed in the USB access control device 110 is/are turned off. For example, the switch between the external interface UA1 and the external interface UA2 in the USB access control device 110 is turned off. It should be noted that if there is any difference between the device descriptor, configuration descriptor, and interface descriptor in the descriptor of the USB device 120 and the device descriptor, configuration descriptor, and interface descriptor in the registration information, and the switch itself in the USB access control device 110 is in the turned-off state, it is OK to keep it in the turned-off state at this time.

Based on the technical solution of the above embodiment, if the USB device 120 is a HID device, that is, Human Interface Devices, the descriptors of the USB device 120 can include not only the device descriptor, configuration descriptor, and interface descriptor, but also the HID descriptor. If the device descriptor, configuration descriptor, interface descriptor, and HID descriptor of the descriptors of the USB device 120 are corresponding the same as the device descriptor, configuration descriptor, interface descriptor, and HID descriptor in the registration information, the switch/switches deployed in the USB access control device 110 is/are turned on. On the contrary, if there is any difference between the device descriptor, configuration descriptor, interface descriptor, and HID descriptor of the descriptor of the USB device 120 and the device descriptor, configuration descriptor, interface descriptor, and HID descriptor in the registration information, the switch/switches deployed in the USB access control device 110 is/are turned off. It should be noted that if the device descriptor, configuration descriptor, and interface descriptor in there is any difference between the descriptors of the USB device 120 and the device descriptor, configuration descriptor, and interface descriptor in the registration information, and the switch in the USB access control device 110 is in the turned-off state, it is OK to keep it in the turned-off state at this time.

Referring to Figure 3, after the first enumeration of the USB device 120 is enabled, the switch/switches between the external interface UA1 and the external interface UA2 in the USB access control device 110 is/are turned on. At this time, the USB device 120 can communicate with the protected device 130. However, it is possible for the user to temper the functions of the USB device 120 through the hidden function of the USB device 120 during the use of the USB device 120, such as opening the hidden storage area, activating the storage function and other behaviors, which lead to the change of the descriptor of the USB device 120. At this time, the re enumeration of the USB device 120 is triggered. In order to prevent the user from opening other functions of the USB device 120 during the use, the USB communication data analysis module analyzes the USB communication data between UA1 and UA2 in real time. After the USB device 120 passes the authentication, if the re enumeration information is found during the use of the USB device 120, the communication between UA1 and UA2 will be disconnected and the alarm will be triggered. For example, after the first enumeration of the USB device 120, the switch/switches between the external interface UA1 and the external interface UA2 in the USB access control device 110 in/are turned on. At this time, the USB device 120 can communicate with the protected device 130. In the process of communication between the two parts, it is also necessary to obtain the descriptor/descriptors of USB device 120 in real time by the USB communication data analysis module between external interface UA1 and external interface UA2 in USB access control device 110. When the descriptors of USB device 120 are detected to be modified, the switch between external interface UA1 and external interface UA2 is turn off. The USB device is enumerated for the second time, which can prevent the user from opening the USB device 120 storage or unauthorized functions, eluding data security supervision, and data leakage on the protected device 130 in actual use. In this way, the security of the protected device 130 can be strengthened.

The method provided by the disclosure can take over each interface of the protected device 130, and ensure the use of the USB interface or serial port device of the protected device 130 can be completed through the external terminal protection device (i.e. USB access control device 110), so that the purpose of protecting the USB interface or serial port of the protected device 130 can be achieved without installing security protection software on the protected device 130. For example, when the USB device 120 is used, the USB access control device 110 will compare the descriptor information of the USB device 120 with the registration information of the USB device 120. If the comparison result is different, the USB device 120 will be prohibited from accessing and the use of the USB device 120 will be terminated.

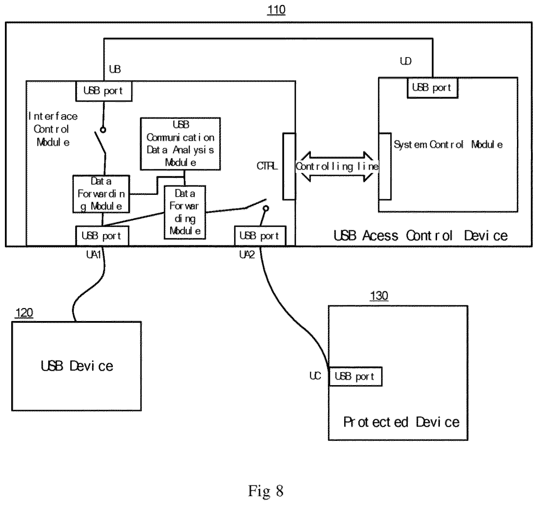

Referring to Figure 3, the USB communication data analysis module in the USB access control device 110 can be connected in series between the USB device 120 connected by the user and the protected device 130, as well as between the USB device 120 and the system control module in the USB access control device 110. Referring to Figure 8, communication data forwarding is realized through the data forwarding module, so that the USB communication data analysis module can be bypassed between the USB device 120 connected by the user and the protected device 130, as well as between the system control module in the USB access control device 110. There is a switch between the USB device 120 connected by the user and the protected device 130. For example, a programmable electronic switch can control the on-off between the USB device 120 connected by the user and the protected device 130 by the control program. The USB access control device 110 can be connected with the control center through the network port to achieve unified management, or it can operate independently without the control center.

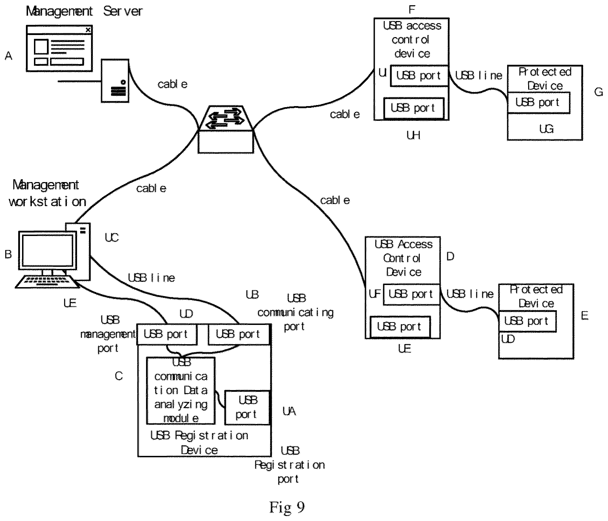

Referring to Figure 9, the USB device need to be registered before use, that is, to be device authorized. Traditional device authorization is only done through the vendor ID (VID), product identification code (PID) and serial number information of USB devices. However, due to the possibility of tampering with the vendor ID, product identification code (PID) and serial number information, such registration cannot prevent users from using USB devices to make the vendor ID, product identification code (PID) and serial number of malicious USB devices consistent with the information of legitimate USB registered devices by modifying the firmware information of USB devices after they pass the registration review. In view of the above situation, the registration process in the disclosure is to obtain the descriptor information of the USB device, to confirm the access mode of the USB device, and to load the corresponding driver. USB descriptors include device descriptors, configuration descriptors, interface descriptors, endpoint descriptors, and string descriptors. HID devices also include HID descriptors, report descriptors, and physical descriptors.

Specifically, before USB devices are connected to USB access control devices D and F, they need to be connected to USB registration port UA of USB registration device C for registration authorization. USB registration device C is connected with management workstation B through USB port. For example, when a USB device is connected to USB registered device C, the descriptor of the USB device, that is, the registration information, can be obtained through the USB communication data analysis module in USB registered device C, and the descriptors of the USB device can be verified according to the USB protocol specification. Then the verified USB device descriptor is sent to management workstation B through the USB communication port. Management workstation B can report the registration information of USB device to management server A through the network, so that management server A can uniformly manage the registration information of USB devices. Connecting USB access control devices D and F to the USB device can request the management server A to obtain the registration information of the USB device, so that it is convenient to compare the registration information of the USB device with the descriptor of the USB device after inserting USB access control devices D and F into the USB device. If they are consistent, the USB device can communicate with the protected devices G and E. On the contrary, if they are inconsistent, the USB device can not communicate with the protected devices G and E.

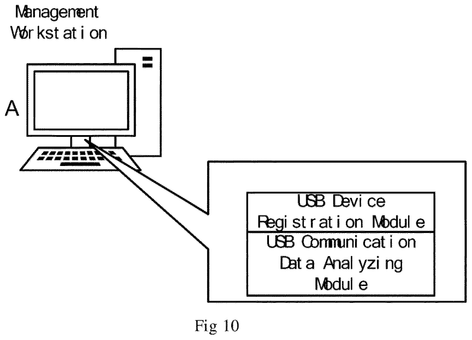

In the embodiment of the invention, the registration and authorization of USB devices can be realized by software or hardware. Figure 9 shows the registration and authorization of USB devices through hardware. For example, the registration authorization of USB devices is realized through the cooperation between USB registration device C and management workstation B. Figure 10 shows that the registration authorization of USB devices is realized through the software installed in management workstation B. For example, the user connects the USB device to the USB port of the management workstation for realizing the registration authorization of the USB device through the USB device registration module and the USB communication data analysis module in management workstation B.

When the USB device registers for authorization, the registered software or hardware will read the device descriptor, configuration descriptor, interface descriptor and other information of the USB device, and record the current USB interface descriptor information according to the currently used USB device configuration descriptor. This information comprises: vendor ID, product identification code (PID) and serial number information, configuration number, currently used configuration identification, number of interfaces supported by configuration, interface number, interface class, interface subclass, interface protocol, etc., and based on these information, unique identification is generated as the legitimacy mark of USB device.

If the USB device is Human Interface Devices (HID), in view of the current number of HID based device class attacks, the registered software or hardware will further collect the HID descriptor information of the HID device. According to the USB protocol specification, the type definition of HID device can be placed in the interface descriptor. The device descriptor and configuration descriptor of USB do not contain the information of HID device.

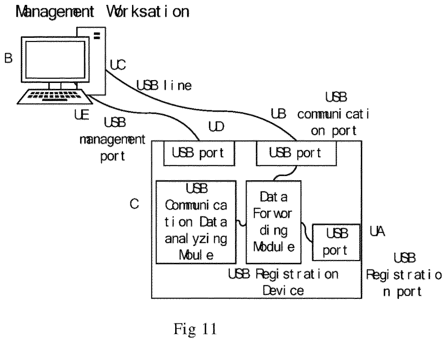

With reference to Figures 9 and 11, the USB device communication data analysis module can be connected between the USB registration port and the USB communication port in a serial manner or the data forwarding module can be used to realize bypass connection on the communication line between the USB registration port and the USB communication port.

Those skilled in the art can understand that all or part of the steps to implement the above embodiments are implemented as computer programs executed by the CPU. When the computer program is executed by the CPU, the above functions defined by the above method provided in the present disclosure are executed. The program can be stored in a computer-readable storage medium, which can be a read-only memory, a disk or a compact disc.

In addition, it should be noted that the above drawings are only a schematic description of the process included in the method according to the exemplary embodiment of the present disclosure, rather than limiting the purpose. It is easy to understand that the processes shown in the above drawings do not indicate or limit the chronological order of these processes. In addition, it is also easy to understand that these processes can be performed synchronously or asynchronously in multiple modules, for example.

The following is an embodiment of the disclosed device, which can be used to implement the embodiment of the disclosed method. For details not disclosed in the embodiment of the disclosed device, please refer to the embodiment of the disclosed method.

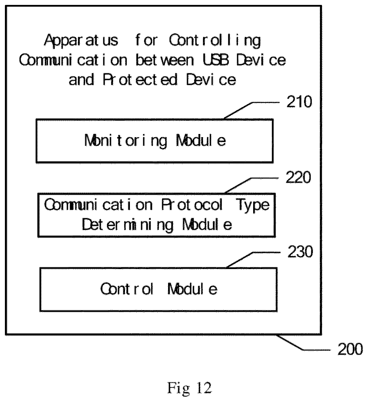

Figure 12 is a block diagram of a communication control device between a USB device and a protected device according to an exemplary embodiment.

As shown in Figure 12, an apparatus 200 for controlling the communication between the USB device and the protected device comprises a monitoring module 210, a communication protocol type determining module 220, and a control module 230.

Specifically, the monitoring module 210 monitors the communication data between the USB device and the protected device after the USB device is connected to the USB access control device and authenticated.

The communication protocol type determining module 220 determines the communication protocol type of the communication data according to the USB protocol specification.

The control module 230 is used to disconnect the communication between the USB device and the protected device according to the communication protocol type of the communication data.

The USB device access control device 200 can protect the data of the protected device through the USB access control device externally connected to the protected device, effectively prevent the leakage of data in the protected device, and can also ensure the data security of the protected device without installing security protection software on the protected device. For example, after the USB device is connected to the USB access control device and passes authentication, the USB access control device monitors the communication data between the USB device and the protected device, determines the communication protocol type of the communication data between the two parts according to the USB protocol specification, and then disconnects the communication between the USB device and the protected device according to the communication protocol type of the communication data.

According to the embodiment of the disclosure, the communication control device 200 of the USB device and the protected device can be used to realize the method for controlling the communication between the USB device and the protected device described in the above embodiment.

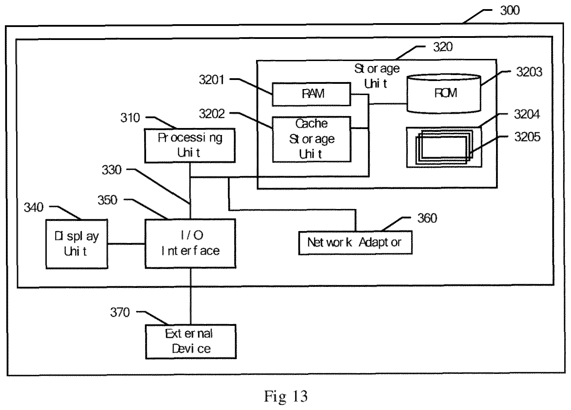

Fig. 13 is a block diagram of an electronic device shown according to an exemplary embodiment.

The electronic device 300 according to this embodiment of the present disclosure will be described below with reference to Figure 13. The electronic device 300 shown in Figure 13 is only an example and should not impose any restrictions on the function and scope of use of the embodiment of the present disclosure.

As shown in fig. 13, the electronic device 300 is represented in the form of a general-purpose computing device. The components of the electronic device 300 may include, but are not limited to, at least one processing unit 310, at least one storage unit 320, bus 330 connecting different system components (including storage unit 320 and processing unit 310), display unit 340, and the like.

Wherein, the storage unit stores program code, which can be executed by the processing unit 310, so that the processing unit 310 executes the steps according to various exemplary embodiments of the disclosure in the specification. For example, the processing unit 310 may perform the steps shown in figs. 2 to 6.

The storage unit 320 may include a readable medium in the form of a volatile storage unit, such as a random access storage unit (RAM) 3201 and/or cache storage unit 3202, and may further include a read-only storage unit (ROM) 3203.

The storage unit 320 may also include a program/utility 3204 with a set (at least one) of program modules 3205, such program modules 3205 include, but are not limited to, an operating system, one or more applications, other program modules, and program data, and each or some combination of these examples may include the implementation of a network environment.

Bus 330 can be one or more of several types of bus structures, including storage unit bus or storage unit controller, peripheral bus, graphics acceleration port, processing unit, or local bus using any bus structure in a variety of bus structures.

The electronic device 300 may also communicate with one or more external devices 300 (such as a keyboard, pointing device, Bluetooth device, etc.) to enable the user to communicate with the device with which the electronic device 300 interacts, and/or any device (such as a router, modem, etc.) with which the electronic device 300 can communicate with one or more other computing devices. This communication can be performed via the input/output (I/O) interface 350. Furthermore, the electronic device 300 may also communicate with one or more networks (such as a local area network (LAN), a wide area network (WAN), and/or a public network, such as the Internet) through the network adapter 360. The network adapter 360 may communicate with other modules of the electronic device 300 through the bus 330. It should be understood that although not shown in the figure, other hardware and/or software modules can be used in combination with electronic device 300, including but not limited to: microcode, device driver, redundant processing unit, external disk drive array, RAID system, tape drive, data backup storage system, etc.

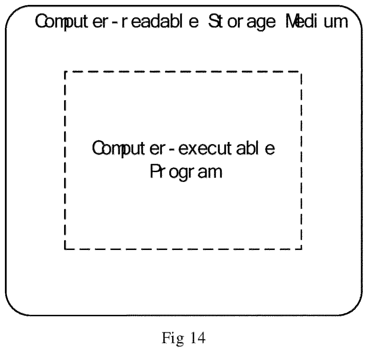

Through the above description of the embodiments, it is easy for those skilled in the art to understand. The example embodiments described here can be realized by software, or by combining software with necessary hardware. Therefore, as shown in Figure 14, the technical solution according to the embodiment of the present disclosure can be embodied in the form of a software product, which can be stored in a non-volatile storage medium (can be CD-ROM, U-disk, mobile hard disk, etc.) or on a network, including several instructions to enable a computing device (can be a personal computer, server, or network device, etc.) to execute the above method according to the embodiment of the present disclosure.

The software product can adopt any combination of one or more readable media. The readable medium may be a readable signal medium or a readable storage medium. The readable storage medium may be, for example, but is not limited to electrical, magnetic, optical, electromagnetic, infrared, or semiconductor systems, devices, or devices, or any combination of the above. More specific examples of readable storage media (non exhaustive list) include: electrical connection with one or more wires, portable disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above.

The computer-readable storage medium may include data signals transmitted in baseband or as part of a carrier wave, in which readable program code is carried. Such transmitted data signals can take many forms, including but not limited to electromagnetic signals, optical signals or any suitable combination of the above. The readable storage medium may also be any readable medium other than the readable storage medium, which may transmit, propagate or transmit a program for use by or in combination with an instruction execution system, device or device. The program code contained on the readable storage medium can be transmitted with any suitable medium, including but not limited to wireless, wired, optical cable, RF, etc., or any suitable combination of the above.

The program code for executing the operations of the present disclosure can be written in any combination of one or more programming languages, which include object-oriented programming languages such as Java, C++, etc., and conventional procedural programming languages such as "C" language or similar programming languages. The program code can be executed completely on the user computing device, partially on the user device, as an independent software package, partially on the user computing device, partially on the remote computing device, or completely on the remote computing device or server. In the case involving a remote computing device, the remote computing device may connect to a user computing device through any kind of network, including a local area network (LAN) or a wide area network (WAN), or may connect to an external computing device (for example, using an Internet service provider to connect via the Internet).

The above computer-readable medium carries one or more programs. When the above one or more programs are executed by one device, the computer-readable medium enables the following functions to be realized: the data of the protected device can be protected by the USB access control device externally connected to the protected device, and the data leakage in the protected device can be effectively prevented. The data of the protected device can also be guaranteed without installing security protection software on the protected device. For example, after the USB device is connected to the USB access control device and the authentication is passed, the USB access control device monitors the communication data between the USB device and the protected device, and determines the communication protocol type of the communication data between them according to the USB protocol specification, and then, according to the communication protocol type of the communication data, the communication between the USB device and the protected device is disconnected.

Those skilled in the art can understand that the above modules can be distributed in the devices according to the description of the embodiment, and corresponding changes can be made in one or more devices that are unique to the embodiment. The modules of the above embodiments can be combined into one module, or further split into multiple sub modules.

Through the above description of the embodiments, it is easy for those skilled in the art to understand. The example embodiments described here can be realized by software, or by combining software with necessary hardware. Therefore, the technical solution according to the embodiment of the present disclosure can be embodied in the form of a software product, which can be stored in a nonvolatile storage medium (can be CD-ROM, U-disk, mobile hard disk, etc.) or on a network, and includes several instructions to enable a computing device (can be a personal computer, server, mobile terminal, or network device, etc.) to execute the method according to the embodiment of the present disclosure.

The exemplary embodiments of the present disclosure are specifically shown and described above. It should be understood that this disclosure is not limited to the detailed structure, setting method or implementation method described herein; On the contrary, the disclosure is intended to cover various modifications and equivalent settings included in the spirit and scope of the appended claims.

## Claims

1. A method for controlling communication between a USB device and a protected device, wherein the method is applied to a USB access control device connected with the protected device through an interface or interfaces, and the method comprises:
after the USB device is connected to the USB access control device and authenticated, monitoring communication data between the USB device and the protected device;
determining a communication protocol type of the communication data according to the USB protocol specification;
disconnecting the communication between the USB device and the protected device according to the communication protocol type of the communication data.

2. The method for controlling the communication between the USB device and the protected device according to claim 1, wherein, the step of determining the communication protocol type of the communication data according to the USB protocol specification comprises:
according to the USB protocol specification, obtaining the communication protocol information from the communication data;
according to the communication protocol information, determining that the communication protocol type of the communication data is batch transmission protocol.

3. The method for controlling the communication between the USB device and the protected device according to claim 2, wherein, the step of disconnecting the communication between the USB device and the protected device according to the communication protocol type of the communication data comprises:
if the communication protocol type of the communication data is batch transmission protocol, disconnecting the communication between the USB device and the protected device.

4. The method for controlling the communication between USB device and protected device according to claim 1, wherein, the step of determining the communication protocol type of the communication data according to the USB protocol specification comprises:
according to the USB protocol specification, obtaining the communication protocol information from the communication data;
according to the communication protocol information, determining that the communication protocol type of the communication data is synchronous transmission protocol.

5. The method for controlling the communication between USB device and protected device according to claim 4, wherein, the step of disconnecting the communication between the USB device and the protected device according to the communication protocol type of the communication data comprises:
if the communication protocol type of the communication data is the synchronous transmission protocol, determining the data flow direction of the communication data;
if the data flow direction is from the protected device to the USB device, disconnecting the communication between the USB device and the protected device.

6. The method for controlling the communication between the USB device and the protected device according to claim 1, wherein, the step of determining the communication protocol type of the communication data according to the USB protocol specification comprises:
according to the USB protocol specification, obtaining the communication protocol information from the communication data;
according to the communication protocol information, determining that the communication protocol type of the communication data is the interrupt transmission protocol.

7. The method for controlling the communication between the USB device and the protected device according to claim 6, wherein, the step of disconnecting the communication between the USB device and the protected device according to the communication protocol type of the communication data comprises:
if the communication protocol type of the communication data is the interrupt transmission protocol, determining the data flow direction of the communication data;
if the data flow direction is from the protected device to the USB device, disconnecting the communication between the USB device and the protected device.

8. The method for controlling the communication between the USB device and the protected device according to claim 1, wherein, the step of determining the communication protocol type of the communication data according to the USB protocol specification comprises:
according to the USB protocol specification, obtaining the communication protocol information from the communication data;
according to the communication protocol information, determining that the communication protocol type of the communication data is a user-defined transmission protocol.

9. The method for controlling the communication between the USB device and the protected device according to claim 8, wherein, the step of disconnecting the communication between the USB device and the protected device according to the communication protocol type of the communication data comprises:
if the communication protocol type of the communication data is the user-defined transmission protocol, determining whether the communication data is non resolvable data;
if the communication data is the non resolvable data, disconnecting the communication between the USB device and the protected device.

10. The method for controlling the communication between the USB device and the protected device according to claim 1, wherein the method further comprises:
when the communication between the USB device and the protected device is disconnected, the alarm information is sent to the protected device.

11. The method for controlling the communication between the USB device and the protected device according to claim 1, wherein the method further comprises:
before the USB access control device is powered on, turning on a switch deployed in the USB access control device, so that the USB device can communicate with the protected device normally; or
after the USB access control device is powered on, turning off the switch deployed in the USB access control device and trigger the enumeration mechanism of the USB device.

12. An apparatus for controlling the communication between a USB device and a protected device, wherein, the apparatus is applied to a USB access control device, the USB access control device is connected with the protected device through an interface or interfaces, and the apparatus comprises:
a monitoring module, which is used for monitoring the communication data between the USB device and the protected device after the USB device is connected to the USB access control device and authenticated;
a communication protocol type determining module, which is used for determining the communication protocol type of the communication data according to the USB protocol specification;
a control module, which is used for disconnecting the communication between the USB device and the protected device according to the communication protocol type of the communication data.

13. An electronic device, comprising:
one or more processors;
a storage device for storing one or more programs;
wherein, when the one or more programs are executed by the one or more processors, the one or more processors implement the method as described in claim 1.

14. A computer-readable medium on which a computer program is stored, wherein, when the program is executed by a processor, the method described in claim 1 is implemented.
